(19) **Europäisches Patentamt**
**European Patent Office**
**Office européen des brevets**

(11) **EP 3 282 797 A1**

(12) **EUROPEAN PATENT APPLICATION**

(43) Date of publication:
**14.02.2018 Bulletin 2018/07**

(51) Int Cl.:
***H04W 72/12*** *(2009.01)*

(21) Application number: **16306038.7**

(22) Date of filing: **09.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
• **Suryaprakash, Vinay**
**70435 Stuttgart (DE)**
• **Baracca, Paolo**
**70435 Stuttgart (DE)**
• **Malanchini, Ilaria**
**70435 Stuttgart (DE)**

(74) Representative: **2SPL Patentanwälte PartG mbB**
**Postfach 15 17 23**
**80050 München (DE)**

(54) **METHODS FOR A MOBILE COMMUNICATION SYSTEM, A BASE STATION, AND A MOBILE STATION, MOBILE COMMUNICATION SYSTEM, BASE STATION, AND MOBILE STATION**

(57) Examples relate to a method for a mobile communication system. The mobile communication system includes a base station communicating with a plurality of associated mobile stations using a downlink radio frame comprising a plurality of sub-frames. Further, the method includes generating a master sub-frame of the downlink radio frame by the base station. The master sub-frame includes scheduling information indicating which of the mobile stations are candidates for scheduling in sub-frames other than the master sub-frame of the downlink radio frame, and which of the mobile stations are scheduled by the base station in the master sub-frame. Additionally, the method includes transmitting the master sub-frame to the plurality of associated mobile stations by the base station. Further, the method includes reading the scheduling information of the master sub-frame by at least one mobile station of the plurality of associated mobile stations. Additionally, the method includes processing, based on the scheduling information of the master sub-frame, at least a portion of the sub-frames of the downlink radio frame for which the at least one mobile station is scheduled or is a candidate for scheduling by the at least one mobile station.

FIG. 1

Description

Field

The present disclosure generally relates to mobile communication systems and, more particularly, to a concept for scheduling mobile stations in a mobile communication system.

Background

A mobile communication system may comprise a base station communicating with a plurality of associated mobile stations, which may also be referred to as User Equipment (UE) according to some mobile communications system standards. The communication of the base station with the associated mobile stations may be separated in a downlink, comprising communication from the base station to the mobile stations, and an uplink, comprising communication from the mobile stations to the base station. Communication resources available in both downlink and uplink, such as physical radio resources like time and/or frequency slots, may be apportioned among or assigned to the mobile stations using a scheduling scheme.

According to the Long-Term Evolution (LTE) communication standard or the LTE-Advanced (LTE-A) communication standard a downlink radio frame comprising a plurality of sub-frames may be used for communicating via the downlink. Each sub-frame comprises a first part occupied by a control channel carrying control information whereas a second part of the sub-frame may be dedicated to a data channel carrying useful information.

For example, a frequency division duplex (FDD) scheme and orthogonal frequency-division multiplexing (OFDM) may be used. In some examples, the first few OFDM symbols, e.g. OFDM symbols 1 to 3, of each sub-frame may be occupied by the control channel. These OFDM symbols may comprise information indicating which of the mobile stations are scheduled in a specific sub-frame. For example, the information may comprise Radio Network Temporary Identifiers (RNTI) or other identifiers of the scheduled mobile stations.

Each associated mobile station expecting data from the base station may check the OFDM symbols of a sub-frame occupied by the control channel by using its individual identifier to see if it has been scheduled by the base station for the sub-frame. In case, a mobile station is scheduled by the base for the sub-frame, the mobile station may process at least a portion of the sub-frame.

Due to limited communication resources typically not all associated mobile stations expecting data from the base station may be scheduled in a sub-frame by the base station. Nonetheless, also mobile stations not scheduled in a sub-frame by the base station conventionally have to check the OFDM symbols occupied by the control channel portion of each sub-frame.

Thus, there is a desire for an improved scheduling concept for mobile stations in a mobile communication system.

Summary

According to a first aspect of the present disclosure, it is provided a method for a mobile communication system. The mobile communication system comprises a base station communicating with a plurality of associated mobile stations using a downlink radio frame comprising a plurality of sub-frames. Further, the method comprises generating a master sub-frame of the downlink radio frame by the base station. The master sub-frame includes scheduling information indicating which of the mobile stations are candidates for scheduling in sub-frames other than the master sub-frame of the downlink radio frame, and which of the mobile stations are scheduled by the base station in the master sub-frame. Additionally, the method comprises transmitting the master sub-frame to the plurality of associated mobile stations by the base station. Further, the method comprises reading the scheduling information of the master sub-frame by at least one mobile station of the plurality of associated mobile stations. Additionally, the method comprises processing, based on the scheduling information of the master sub-frame, at least a portion of the sub-frames of the downlink radio frame for which the at least one mobile station is scheduled or is a candidate for scheduling by the at least one mobile station.

In some examples, the method comprises receiving channel state information from the at least one mobile station of the plurality of associated mobile stations by the base station. The channel state information relates to at least one further downlink radio frame previously transmitted by the base station. Further, the method comprises determining, based on the received channel state information, a set of resource allocation values by the base station. Each resource allocation value indicates a proportion of resources assigned to a mobile station of the plurality of associated mobile stations in a sub-frame of the downlink radio frame. Additionally, the method comprises determining, based on the determined set of resource allocation values, which of the mobile stations are scheduled by the base station in the master sub-frame and which mobile stations are candidates for scheduling in sub-frames other than the master sub-frame of the downlink radio frame by the base station.

According to some examples, determining of the set of resource allocation values comprises determining, based on the received channel state information, a set of achievable rate values. Each achievable rate value indicates a predicted achievable rate for a mobile station of the plurality of associated mobile stations in a sub-frame of the downlink radio frame. Further, the determining of the set of resource allocation values comprises determining, based on the determined set of achievable rate values, the set of resource allocation values.

In some examples, determining of the set of resource allocation values comprises determining, based on the received channel state information, an achievable rate probability density function. The achievable rate probability density function indicates a predicted achievable rate for each sub-frame of the downlink radio frame and each mobile station of the plurality of associated mobile stations. Further, the determining of the set of resource allocation values comprises determining, based on the determined achievable rate probability density function, the set of resource allocation values.

According to some examples, determining which mobile stations are candidates for scheduling in sub-frames other than the master sub-frame of the downlink radio frame comprises, for each sub-frame other than the master sub-frame of the downlink radio frame, ordering the plurality of associated mobile stations according to the corresponding resource allocation value to obtain a respective ordered set of mobile stations. Further, the determining which mobile stations are candidates for scheduling in sub-frames other than the master sub-frame of the downlink radio frame comprises selecting $N_{TS}$ mobile stations with the highest corresponding resource allocation values of the respective ordered set of mobile stations as candidates for scheduling in the respective sub-frame.

In some examples, determining which of the mobile stations are scheduled by the base station in the master sub-frame comprises ordering the mobile stations of the plurality of associated mobile stations according to the corresponding resource allocation value to obtain an ordered set of mobile stations. Further, the determining which of the mobile stations are scheduled by the base station in the master sub-frame comprises scheduling $N_{TS}$ mobile stations with the highest corresponding resource allocation values of the ordered set of mobile stations in the master sub-frame.

According to some examples, the method further comprises transmitting further channel state information to the base station by the at least one mobile station. The further channel state information relates to a first sub-frame preceding a second sub-frame of the downlink radio frame. Further, the at least one mobile station is a candidate for scheduling in the second sub-frame. Additionally, the method comprises scheduling, based on the further channel state information and the scheduling information of the master sub-frame, mobile stations of the plurality of associated mobile stations identified as candidates in the master sub-frame in the second sub-frame by the base station. Further, the method comprises generating the second sub-frame by the base station. The second sub-frame includes sub-scheduling information indicating which mobile stations are scheduled by the base station in the second sub-frame.

In some examples, the first sub-frame and the second sub-frame are successive sub-frames of the downlink radio frame.

According to some examples, for each mobile station of the plurality of associated mobile stations a respective dedicated physical downlink channel is allocated by the base station.

In some examples, the master sub-frame is the first or initial sub-frame of the downlink radio frame.

According to a second aspect of the present disclosure, it is provided a mobile communication system. The mobile communication system comprises a plurality of mobile stations. Further, the mobile communication system comprises a base station for communicating with the plurality of mobile stations using a downlink radio frame comprising a plurality of sub-frames. The mobile stations are associated with the base station. Further, the base station comprises a processor configured to generate a master sub-frame of the downlink radio frame. The master sub-frame includes scheduling information indicating which of the mobile stations are candidates for scheduling in sub-frames other than the master sub-frame of the downlink radio frame, and which of the mobile stations are scheduled by the base station in the master sub-frame. Additionally, the base station comprises a communication interface configured to transmit the master sub-frame to the plurality of mobile stations. Further, a mobile station of the plurality of mobile stations comprises a communication interface configured to receive the master sub-frame. Additionally, the mobile station comprises a processor configured to read the scheduling information of the master sub-frame. The processor is further configured to process, based on the scheduling information of the master sub-frame, at least a portion of the sub-frames of the downlink radio frame for which the mobile station is scheduled or is a candidate for scheduling.

According to a third aspect of the present disclosure, it is provided a method for a base station of a mobile communication system. The base station is configured to communicate with a plurality of associated mobile stations using a downlink radio frame comprising a plurality of sub-frames. The method comprises generating a master sub-frame of the downlink radio frame. The master sub-frame includes scheduling information indicating which of the mobile stations are candidates for scheduling in sub-frames other than the master sub-frame of the downlink radio frame, and which of the mobile stations are scheduled by the base station in the master sub-frame. Further, the method comprises transmitting the master sub-frame to the plurality of associated mobile stations.

According to a fourth aspect of the present disclosure, it is provided a base station of a mobile communication system. The base station is configured for communicating with a plurality of associated mobile stations using a downlink radio frame comprising a plurality of sub-frames. The base station comprises a processor configured to generate a master sub-frame of the downlink radio frame. The master sub-frame includes scheduling information indicating which of the mobile stations are candidates for scheduling in sub-frames other than the master sub-frame of the downlink radio frame, and which of the mobile stations are scheduled by the base station in the master sub-frame. Further, the base station comprises a communication interface configured to transmit the master sub-frame to the plurality of associated mobile stations.

According to a fifth aspect of the present disclosure, it is provided a method for a mobile station of a mobile communication system. The mobile communication system comprises a base station communicating with a plurality of associated mobile stations using a downlink radio frame comprising a plurality of sub-frames. Further, the downlink radio frame comprises a master sub-frame including scheduling information indicating which of the mobile stations are candidates for scheduling in sub-frames other than the master sub-frame of the downlink radio frame, and which of the mobile stations are scheduled by the base station in the master sub-frame. The method comprises reading the scheduling information of the master sub-frame. Further, the method comprises processing, based on the scheduling information of the master sub-frame, at least a portion of the sub-frames of the downlink radio frame for which the mobile station is scheduled or is a candidate for scheduling.

According to a sixth aspect of the present disclosure, it is provided a mobile station of a mobile communication system. The mobile communication system comprises a base station communicating with a plurality of associated mobile stations using a downlink radio frame comprising a plurality of sub-frames. The downlink radio frame comprises a master sub-frame including scheduling information indicating which of the mobile stations are candidates for scheduling in sub-frames other than the master sub-frame of the downlink radio frame, and which of the mobile stations are scheduled by the base station in the master sub-frame. The mobile station comprises a communication interface configured to receive the master sub-frame. Further, the mobile station comprises a processor configured to read the scheduling information of the master sub-frame. The processor is further configured to process, based on the scheduling information of the master sub-frame, at least a portion of the sub-frames of the downlink radio frame for which the mobile station is scheduled or is a candidate for scheduling.

## Brief description of the Figures

Some embodiments of apparatuses and/or methods will be described in the following by way of example only, and with reference to the accompanying figures, in which

Fig. 1    illustrates an example of a cellular mobile communication system;

Fig. 2    illustrates a schematic diagram of an example of a downlink radio frame;

Fig. 3    illustrates a schematic diagram of an example of scheduling information;

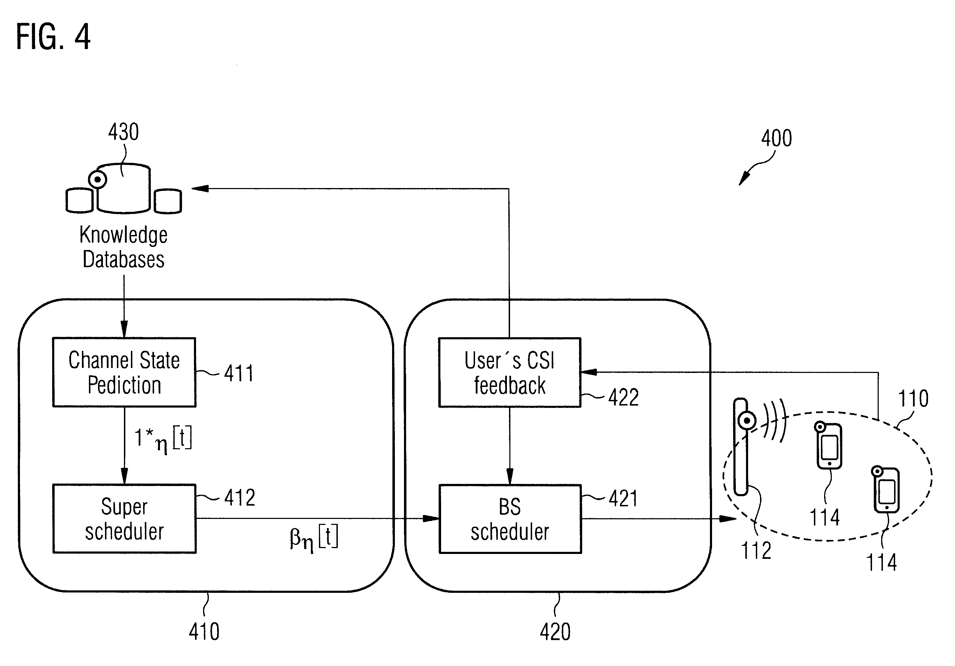

Fig. 4    illustrates a schematic diagram of an example of a scheduling system;

Fig. 5    illustrates a flowchart of an example of a method for the mobile communication system;

Fig. 6a   illustrates a schematic diagram of an example of a base station of the mobile communication system; and

Fig. 6b   illustrates a schematic diagram of an example of a mobile station of the mobile communication system.

## Description of Examples

Various examples will now be described more fully with reference to the accompanying drawings in which some examples are illustrated. In the figures, the thicknesses of lines, layers and/or regions may be exaggerated for clarity.

Accordingly, while examples are capable of various modifications and alternative forms, examples thereof are shown by way of example in the figures and will herein be described in detail. It should be understood, however, that there is no intent to limit examples to the particular forms disclosed, but on the contrary, examples are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

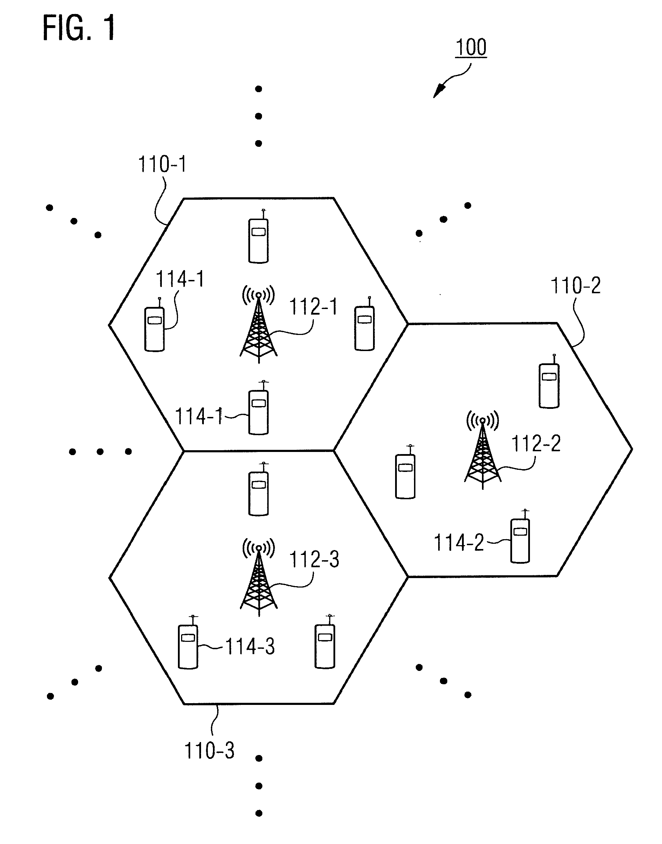

**Fig.** 1 illustrates an example of a cellular mobile communication system 100 to which the present disclosure may be applied to. The mobile communication system 100 comprises a plurality of radio cells 110, each served by a respective base station 112. Each base station 112 communicates with a plurality of mobile stations 114 associated with the respective base station 112 or cell 110.

The mobile communication system 100 may be any present or future mobile communication system. For example, it may be a Third Generation Partnership Project (3GPP)-standardized mobile communication network. The mobile communication system may correspond to, for example, a Long-Term Evolution (LTE), an LTE-Advanced (LTE-A), a High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or a mobile communication network with different standard, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Each base station 112 may be operable to communicate with one or more active mobile stations 114 and may be located in or adjacent to a coverage area of another base station, e.g. a macro cell base station or small cell base station. The base station 112 may be located in the fixed or stationary part of the network or system. The base station 112 may correspond to a remote radio head, a transmission point, an access point, radio equipment, a macro cell, a small cell, a micro cell, a femto cell, a metro cell etc. A base station transceiver may correspond to a base station 112 understood as a logical concept of a node/entity terminating a radio bearer or connectivity over the air interface between a terminal/mobile transceiver and a radio access network. The base station 112 may be a wireless interface of a wired network, which enables transmission of radio signals to user equipment (UE), the mobile station 114 or a mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

Additionally, the mobile station 114 may be served by a plurality of base stations 112. The mobile station 114 may be anchored to the plurality of base stations 112 and may receive data from more than one of the base stations 112. For example, a coordinated multi point (CoMP) scheme may be used. In this way, multiple base stations 112 may serve multiple mobile stations 114.

The mobile station 114 may correspond to a smartphone, a cell phone, user equipment, radio equipment, a mobile, a mobile user device, a laptop, a notebook, a personal computer, a Personal Digital Assistant (PDA), a Universal Serial Bus (USB) -stick, a car, a mobile relay transceiver for D2D communication, etc. The mobile station 114 may also be referred to as User Equipment (UE) or mobile in line with the 3GPP terminology. For example, the plurality of associated mobile stations 114 may be in the range of 2 to 100 associated mobile stations, in the range of 2 to 50 associated mobile stations, or in the range of 2 to 10 associated mobile stations.

The communication of a base station 112 with the associated mobile stations 114 may be separated in a downlink, comprising communication from the base station 112 to the mobile stations 114, and an uplink, comprising communication from the mobile stations 114 to the base station 112.

A downlink signal transmitted by the base station 112 may comprise a plurality of downlink radio frames, which can be understood as numbered time intervals used for data transmission on a radio physical channel. Thereby one downlink radio frame can include a plurality of sub-frames, and each sub-frame may be further subdivided into smaller time units, such a slots or symbols. In examples related to orthogonal frequency-division multiplexing (OFDM), the symbols may be OFDM symbols occupying physical time and/or frequency resources. For example, the number of sub-frames in the downlink radio frame may be in the range of 2 to 100, in the range of 5 to 50, or in the range of 8 to 12. For example, the downlink radio frame may comprise 10 sub-frames.

Each sub-frame may comprise a control part dedicated to a control channel, a data part dedicated to useful data transmission, and reference signals. The control part of a sub-frame comprises information indicating which mobile stations 114 are scheduled by the base station 112 in the sub-frame. The information may comprise Radio Network Temporary Identifiers (RNTI) or other identifiers of the scheduled mobile stations. For example, the base station 112 may schedule a mobile station 114 in a sub-frame by assigning a resource block of the data part of the sub-frame to the mobile station 114.

In a state of the art mobile communication system each active mobile station 114 checks the control-parts of each sub-frame of the downlink radio frame to see if it has been scheduled by the base station 112 for the respective sub-frame. For example, a mobile station 114 may be active, if the mobile station 114 is expecting data from the base station 112, if a dedicated physical downlink channel is allocated for the mobile station 114 by the base station 112, or if the mobile station 114 is in a CELL_DCH state or a CELL_FACH state. Further, each active mobile station 114 performs channel state estimation for all sub-frames of the downlink radio frame on basis of the reference signals to generate channel state information (CSI) and transmits the generated CSI to the base station 112. For example, the reference signal may each comprise a predetermined pilot sequence and the mobile stations 114 may each comprise a receiver circuit for receiving the reference signals and a processor configured to generate the channel state information on basis of the predetermined pilot sequences and the received reference signals. For checking the control-part of the sub-frame, generating the CSI and transmitting the generated CSI to the base station 112 a respective receiver circuit and a respective processor of each active mobile station 114 need to be supplied with electric energy. Typically not all active mobile stations 114 can be scheduled in each sub-frame of the downlink radio frame by the base station 112. Thereby, also active mobile stations 114 not scheduled in a sub-frame by the base station 112 may check the control-part of the sub-frame, generate the CSI and transmit the generated CSI to the base station 112. By this, active mobile stations 114 not scheduled in a sub-frame by the base station 112 may unnecessarily squander energy by checking the control-part of the sub-frame, generating the CSI and transmitting the generated CSI to the base station 112.

In the present disclosure a downlink radio frame comprising at least one master sub-frame including scheduling information is proposed. The scheduling information indicates which active mobile stations 114 may be scheduled for each sub-frame of the downlink radio frame. A candidate for scheduling in a sub-frame is a mobile station 114, which may be scheduled in the sub-frame by the base station 112. According to the present disclosure, only active mobile stations 114, which are candidates for scheduling in a sub-frame, may check the control channel and transmit the CSI to the base station 112. In this way, active mobile stations 114, which are not candidates for scheduling in a sub-frame, may avoid checking the control channel and transmitting the CSI to the base station 112. By this, active mobile stations 114, which are not candidates for scheduling in a sub-frame, may save electric energy. The master sub-frame may be the first or initial sub-frame of the downlink radio frame.

The skilled person having benefit from the present disclosure will appreciate however that also other positions of the master sub-frame within the downlink radio frame are possible.

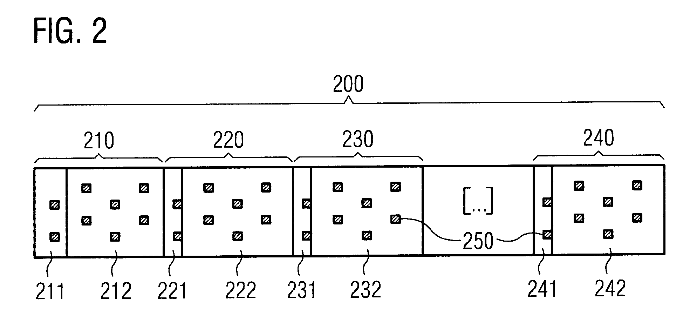

**Fig. 2** illustrates a schematic diagram of an example of a downlink radio frame 200 according to the present disclosure. The downlink radio frame 200 comprises a master sub-frame 210 and a plurality of further sub-frames 220, 230, 240. For example, the downlink radio frame 200 comprises a total number of K sub-frames. The master sub-frame 210 is the first sub-frame of the downlink radio frame 200, the sub-frame 220 is the second sub-frame of the downlink radio frame 200, the sub-frame 230 is the third sub-frame of the downlink radio frame 200, and the sub-frame 240 is the last sub-frame of the downlink radio frame 200.

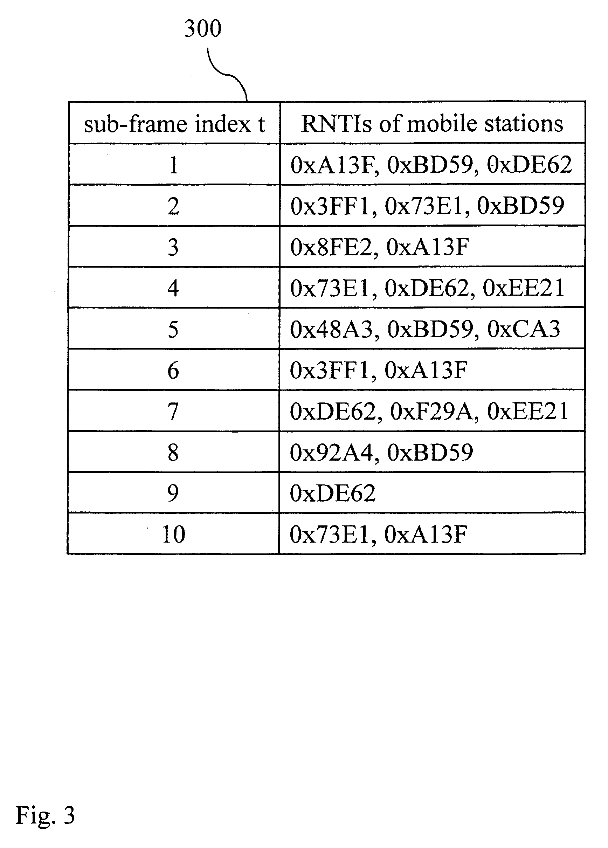

The master sub-frame 210 comprises a master control signal 211, a data transmission part 212, and a plurality of reference signals 250 comprised in the master control signal 211 and the data transmission part 212. The master control signal 211 comprises scheduling information indicating which of the mobile stations 114 are scheduled in the master sub-frame 210 and which mobile stations 114 are candidates for scheduling in the sub-frames 220, 230, 240. A schematic diagram of an example of scheduling information 300 according to the present disclosure is illustrated in Fig. 3. The scheduling information 300 is illustrated as a table. The left column of the table lists a sub-frame index $t$ of sub-frames 210, 220, 230, 240 of the downlink radio frame 200. The right column of the table lists radio network temporary identifiers (RNTI) of mobile stations 114 which are candidates for scheduling or scheduled in the sub-frame 210, 220, 230, 240 listed in the same row. The RNTIs of the mobile stations 114 have a length of 16 bit and are illustrated by hexadecimal numbers. The skilled person having benefit from the present disclosure will appreciate however that any identifier, which uniquely identifies a mobile station 114, may be used in the scheduling information 300 instead of the RNTI. The scheduling information 300 may be transmitted to the mobile stations 114 via a common control channel (CCCH). Alternatively, the scheduling information 300 may be transmitted to a mobile station 114 via a dedicated control channel dedicated to the mobile station 114. In this case, the scheduling information 300 may comprise a set of sub-frame indices $t$ for which the mobile station 114 is a candidate for scheduling or scheduled.

The sub-frames 220, 230, 240 each comprise a sub-control signal 221, 231, 241, a data transmission part 222, 232, 242, and a plurality of reference signals 250 comprised in the respective sub-control signal 221, 231, 241 and the respective data transmission part 222, 232, 242. The sub-control signals 221, 231, 241 each comprise sub-scheduling information indicating which mobile stations 114 are scheduled by the base station 112 in the respective sub-frame 220, 230, 240. For example, the sub-scheduling information may comprise the RNTIs of the mobile stations 114, which are scheduled in the respective sub-frame 220, 230, 240. The skilled person having benefit from the present disclosure will appreciate however that any identifier, which uniquely identifies a mobile station 114, may be used in the sub-scheduling information instead of the RNTI.

The master control signal 211 and/or the sub-control signals 221, 231, 241 each may comprise specific downlink control information (DCI) unique to each mobile station 114 scheduled in the respective sub-frame 210, 220, 230, 240. The DCI may detail several transmission parameters, e.g. resource blocks (RB) used for the transmission, a quadrature amplitude modulation (QAM) constellation, and a channel coding rate, to the scheduled mobile stations 114. For example, the DCI may be sent by the base station 112 via a procedure that combines this sequence of bits with another sequence, which uniquely identifies the scheduled mobile station 114, e.g. with the RNTI.

For example, the sub-control signals 221, 231, 241 are used in the sub-frames 220, 230, 240, e.g. in sub-frames $t$=2,3,...,K, to inform which active mobile stations 114 are served in a particular sub-frame 220, 230, 240 and which transmission parameters are used.

All active mobile station 114 check the master control signal 211 to see if they are scheduled in the master sub-frame 210 and check whether they are candidates to be scheduled in subsequent sub-frames 220, 230, 240. Only the active mobile stations 114, which are candidates for scheduling in a sub-frame 220, 230, 240 other than the master sub-frame 210, check the sub-control signal 221, 231, 241 of the sub-frame 220, 230, 240. For example, the mobile stations 114 each check the scheduling information and the sub-scheduling information by using their respective RNTI to determine if they are scheduled or a candidate for scheduling in a sub-frame 210, 220, 230, 240.

If the mobile station 114 is a candidate for scheduling in a sub-frame 220, 230, 240, the mobile station 114 performs channel estimation in a directly preceding sub-frame 210, 220, 230 to generate CSI feedback. The mobile station 114 further transmits the generated CSI feedback to the base station 114. In this way, an unnecessary generation and transmission of CSI feedback may be avoided. By this, an energy consumption of the mobile station may 114 be reduced.

Further, all mobile station 114 perform channel estimation for the last sub-frame 240 of the downlink radio frame 200 to generate a respective CSI feedback and transmit the generated CSI feedback to the base station 112, since all mobile stations 114 are candidates for scheduling in a master sub-frame 210 of a subsequent downlink radio frame 200.

In the present disclosure further a scheduling system on basis of a channel prediction scheme is proposed for scheduling the mobile stations 114. A schematic diagram of an example of a scheduling system 400 according to the present disclosure is illustrated in Fig.

4. The scheduling system 400 comprises a super scheduling device 410, a base station scheduling device 420 and knowledge databases 430. Further, a base station 112 and two mobile stations 114 associated with the cell 110 are illustrated. The super scheduling device 410 comprises a channel state prediction device 411 and a super scheduler device 412. The base station scheduling device 420 comprises a base station scheduler device 421 and a CSI feedback device 422. For example, the super scheduling device 410, the base station scheduling device 420, and the knowledge databases 430 may be integrated into the base station 112.

At the beginning of the downlink radio frame 200 the channel state prediction device 411 may determine an expected achievable rate $r_n[t]$ for every mobile station 114, *e.g.* $n \in N$, and for every sub-frame 210, 220, 230, 240, e.g. $t$=1,2,...K, on basis of statistical channel information. Here n denotes a mobile station index, N denotes the set or a collection of mobile stations 114, $t$ denotes a sub-frame index, and K denotes a number of sub-frames in the downlink radio frame 200. The channel state prediction device 411 may comprise a memory unit and a processor for determining the expected achievable rate $r_n[t]$. For example, the statistical channel information may comprise CSI previously transmitted to the base station 112. Optionally, the channel state prediction device 411 may determine the expected achievable rate $r_n[t]$ on basis of statistical channel information and of related knowledge from the knowledge databases 430. For example, the knowledge databases 430 are provided by a server comprising a processor, a memory unit and a communication interface.

For example, the related knowledge is an estimation of a future value of a received signal strength indicator (RSSI) or a future path loss value for the mobile stations 114. The estimation of the future value of the RSSI comprises predicting a future position of a mobile station 114 on basis of a current location of the mobile station 114, a speed of the mobile station 114, a direction of movement of the mobile station 114, and an electronic street map. The estimated future RSSI value or the estimated future path loss value for the mobile station 114 is estimated by retrieving a predetermined RSSI value or a predetermined path loss value from a coverage database, e.g. from a coverage map, for the predicted future location of the mobile station 114. The coverage database comprises RSSI values or path loss values for locations within the cell 110 determined previously, e.g. by the mobile station 114. For example, the coverage database may be an element of the knowledge databases 430. For example, the expected achievable rate $r_n[t]$ for a mobile station 114 with index $n$ and for a sub-frame $t$ may be proportional to the corresponding estimated future RSSI value. Alternatively, the expected achievable rate $r_n[t]$ for a mobile station 114 for a sub-frame may be inversely proportional to the corresponding estimated future channel loss value.

For example, the related knowledge is an estimation of a future channel gain value for a mobile station 114. The future channel gain value is estimated on basis of predetermined channel gain values using a linear regression model. For example, the predetermined channel gain values may be previously determined by the mobile station 114 and the previously determined channel gain values may be stored in the knowledge databases 430. For example, the expected achievable rate $r_n[t]$ for a mobile station 114 for a sub-frame may be proportional to the corresponding estimated future channel gain value.

Alternatively, the channel state prediction device 411 may determine a probability density function $p(r_n[t])$ for every mobile station 114, e.g. $n \in N$, and for every sub-frame 210, 220, 230, 240, e.g. $t$=1,2,...K, on basis of the statistical channel information. In this way, a potential loss in terms of spectral efficiency caused by the super scheduler assignment may be minimized, when a distribution of a prediction error is known. For example, the achievable rate may be provided as a random variable.

The channel state prediction device 411 transmits the determined achievable rate $r_n[t]$ or the determined probability density function $p(r_n[t])$ to the super scheduler device 412. For example, the channel state prediction device 411 may comprise a communication circuit for transmitting the determined expected achievable rate $r_n[t]$ or the determined probability density function $p(r_n[t])$ to the super scheduler device 412.

The super scheduler device 412 determines a resource allocation $\beta_n[t]$ for each mobile station and each of the K sub-frames on basis of the received achievable rate $r_n[t]$ or on basis of the received probability density function $p(r_n[t])$. The super scheduler device 412 may comprise a memory unit and a processor for determining the resource allocation $\beta_n[t]$. Further, the super scheduler device 412 may comprise a communication circuit for receiving the achievable rate $r_n[t]$ or the probability density function $p(r_n[t])$.

For example, the super scheduler device 412 is configured to define a vector of optimization variables $\beta_n=[\beta_n[1], \beta_n[2],..., \beta_n[K]]$ containing the resource allocation and a vector of input parameters $\mathbf{r}_n=[r_n[1], r_n[2],..., r_n[K]]$ containing the predicted achievable rate for each mobile station 114. The super scheduler device 412 is further configured to solve the optimization problem

$$\max_{\beta_n, n \in N} \quad C = \sum_{n \in N} f(\beta_n, \mathbf{r}_n)$$

$$\text{s.t.} \quad \sum_{n \in N} \beta_n[t] \leq N_{MAX}, \quad t = 1,2,...K$$

$$0 \leq \beta_n[t] \leq 1, \quad t = 1,2,...K, n \in N$$

so as to determine the resource allocation $\beta_n[t]$ on basis of the achievable rate $r_n[t]$. Here $N_{MAX}$ denotes the maximum number of mobile stations that can be served in one sub-frame. The function $f(\cdot)$ in the optimization problem above may represent any kind of scheduling criterion, e.g. proportional fair scheduling or max-rate scheduling. For example, the scheduling criterion may be a max-rate scheduling and the function $f(\cdot)$ may be defined as $f(x,y)=x^*y$. Different algorithms may be used to solve the optimization problem.

Alternatively, the super scheduler device 412 is configured to solve the optimization problem

$$\max_{\beta_n, n \in N} \quad C = \sum_{n \in N} f(\beta_n | \mathbf{r}_n) p(\mathbf{r}_n)$$

$$\text{s.t.} \quad \sum_{n \in N} \beta_n[t] \leq N_{MAX}, \quad t = 1,2,...K$$

$$0 \leq \beta_n[t] \leq 1, \quad t = 1,2,...K, n \in N$$

to determine the resource allocation $\beta_n[t]$ on basis of the received probability density function $p(r_n[t])$.

The vector $\beta_n$ determined by the super scheduler device 412 represents the proportion of resources assigned to each mobile station 114, e.g. $n \in N$, in the next K sub-frames 210, 220, 230, 240.

The super scheduler device 412 transmits the determined resource allocation $\beta_n[t]$ to the base station scheduler device 421. For example, the super scheduler device 412 may comprise a communication circuit for transmitting the determined resource allocation $\beta_n[t]$ to the base station scheduler device 421.

The base station scheduler device 421 determines a set $N_{TS}[t]$, $t$=1,2,...,K, of candidates who can be scheduled in each sub-frame on basis of the received resource allocation $\beta_n[t]$. The base station scheduler device 421 may comprise a memory unit and a processor for determining the set $N_{TS}[t]$. Further, the base station scheduler device 421 may comprise a communication circuit for receiving the resource allocation $\beta_n[t]$.

To determine the set $N_{TS}[t]$ the base station scheduler device 421 orders the mobile stations 114 according to the assigned resource allocation $\beta_n[t]$ for each $t$ and selects the $N_{TS}$ mobile stations 114 with the highest resource allocation $\beta_n[t]$. Here $N_{TS}$ denotes a cardinality of the set $N_{TS}[t]$. Further, $N_{TS}$ may be greater than or equal to $N_{MAX}$. For example, $N_{TS}$ is in the range of 1 to 100, in the range of 10 to 50, or in the range of 15 to 25. In this way, a scheduling probability of each mobile station may be mapped to a proportion of resources assigned to that mobile station. Alternatively, different ordering methods based on the output parameters of the super-scheduler optimization problem may be chosen by operators, e.g. by operators of the base station 112 or of the mobile communication system 100.

Further, in each sub-frame 210, 220, 230, 240, e.g. in the sub-frame $t$, the base station scheduler device 421 or the base station 112 performs a mobile station selection. The mobile station selection may be similar to a conventional mobile station selection according to the state of the art. For example, the base station scheduler device 421 or the base station 112 may schedule all mobile stations 114, which are candidates for scheduling in a sub-frame 220, 230, 240, in the sub-frame 220, 230, 240. The set of mobile stations 114, for which the resource allocation optimization is evaluated, may be a subset $N_{TS}[t]$ of all active mobile stations 114 associated with the base station 112 or in a cell 110.

The base station scheduler device 421 may further use CSI feedback received from the CSI feedback device 422 for the mobile station selection and/or for determining the set $N_{TS}[t]$. The base station scheduler device 421 and the CSI feedback device 422 each may comprise a communication circuit for transmitting the CSI feedback. The CSI feedback device 422 is configured for receiving CSI feedback from the mobile stations 114. The CSI feedback device 422 may comprise a receiver circuit for receiving CSI feedback from the mobile stations 114. The CSI feedback device 422 further transmits the received CSI feedback to the knowledge databases 430. The CSI feedback device 422 and a server providing the knowledge databases 430 each may comprise a communication interface or a communication circuit for transmitting the CSI feedback. For example, the knowledge databases 430 may comprise statistical channel information generated on basis of the CSI feedback received from the CSI feedback device 422, e.g. generated by a processor of a server providing the knowledge databases 430.

For example, the super scheduling device 410 and the base station scheduling device 420 may work as two nested schedulers, which operate using different time scales and different channel information. For example, the super scheduling device 410 may work at a time scale $T_1$ indicating a duration of the downlink radio frame 200 measured in milliseconds. For example, $T_1$ may be 10ms. For example, the base station scheduling device 420 may work at a time scale $T_2$ indicating a duration of a sub-frame 210, 220, 230, 240 in milliseconds. For example, $T_2$ may be smaller than $T_1$. For example, $T_2$ may be 1ms. For example, each of the sub-frames 210, 220, 230, 240 of the downlink radio frame 200 may have a duration in the range of 100$\mu$s to 10ms, in the range of 500$\mu$s to 5ms, or in the range of 800$\mu$s to 1.2ms. For example, each of the sub-frames 210, 220, 230, 240 of the downlink radio frame 200 may have a duration of 1ms. For example, the downlink radio frame 200 may have a duration in the range of 1ms to 100ms, in the range of 5ms to 50ms, or in the range of 8ms to 12ms. For example, the downlink radio frame 200 may have a duration of 10ms.

For example, the super scheduling device 410 may use a channel state prediction over the upcoming K sub-frames as input. For example, the super scheduling device 410 may output a predictive allocation for the subsequent downlink radio frame 200, i.e. the ensuing K sub-frames 210, 220, 230, 240. For example, the base station scheduling device 420 may use CSI information based on reference signals from a previous sub-frame t-1, e.g. as input for scheduling mobile stations 114 in the sub-frame t. For example, the base station scheduling device 420 may output an allocation for a current sub-frame t. For example, the base station scheduling device 420 may perform an optimization at the beginning of every sub-frame, e.g. every $T_2$ milliseconds. For example, the super scheduling device 410 may perform an optimization at the beginning of every downlink radio frame 200, e.g. every $T_1$ milliseconds. For example, the super scheduling device 410 may determine a predictive allocation for the next K sub-frames 210, 220, 230, 240. For example, the super scheduling device 410 may determine an allocation for a next sub-frame.

For example, at the beginning of each downlink radio frame, i.e. every $T_1$ milliseconds, the channel state prediction device 411 may take statistical channel information as well as any related knowledge from the knowledge databases 430 as input and may predict the expected achievable rate $r_n[t]$ for every mobile station 114, *e.g. $n \in$ N*, and for every sub-frame 210, 220, 230, 240, e.g. for $t$=1,2,...K. For example, a use of the CSI feedback may be minimized. For example, if the channel state prediction device 411 may require more CSI feedbacks, e.g. for better a prediction, then the number of times that a mobile station 114 sends the CSI feedback may be increased.

For example, at the beginning of every downlink radio frame, the super scheduler device 412 may use the information provided by the channel state prediction device 411 and may evaluate the optimal resource allocation $\beta_n[t]$ for the upcoming K sub-frames.

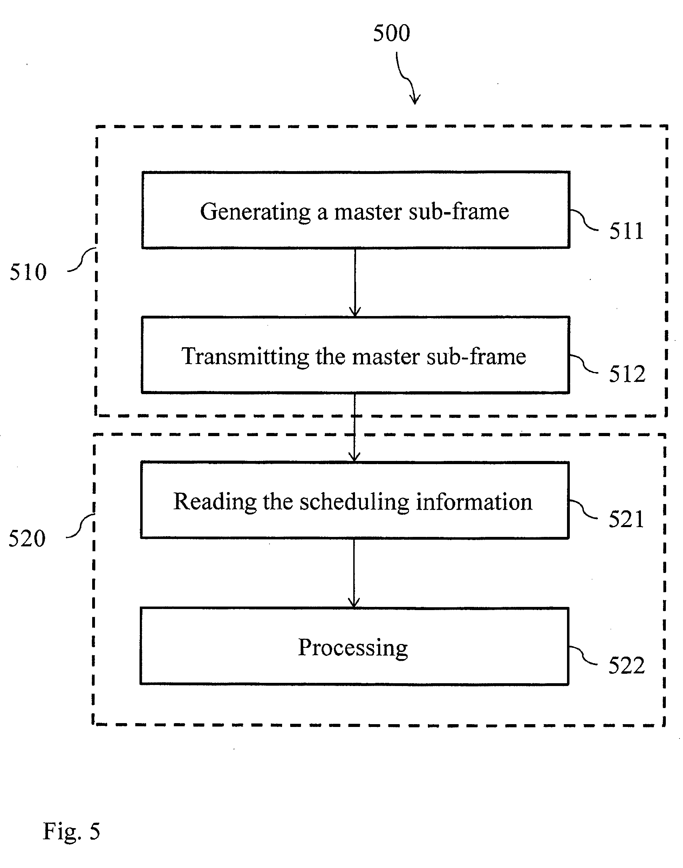

**Fig. 5** illustrates a flowchart of an example of a method 500 for the mobile communication system 100 according to the present disclosure. The method 500 comprises a base station part 510 performed by the base station 112 and a mobile station part 520 performed by the mobile station 114. The base station part 510 comprises generating 511 the master sub-frame 210 of the downlink radio frame 200 and transmitting 512 the master sub-frame 210 to the mobile stations 114. The mobile station part 520 comprises reading 521 the scheduling information 300 of the master sub-frame 210 and processing 522, based on the scheduling information 300 of the master sub-frame 210, at least a portion of the sub-frames 210, 220, 230, 240 of the downlink radio frame 200 for which the mobile station 114 is scheduled or is a candidate for scheduling.

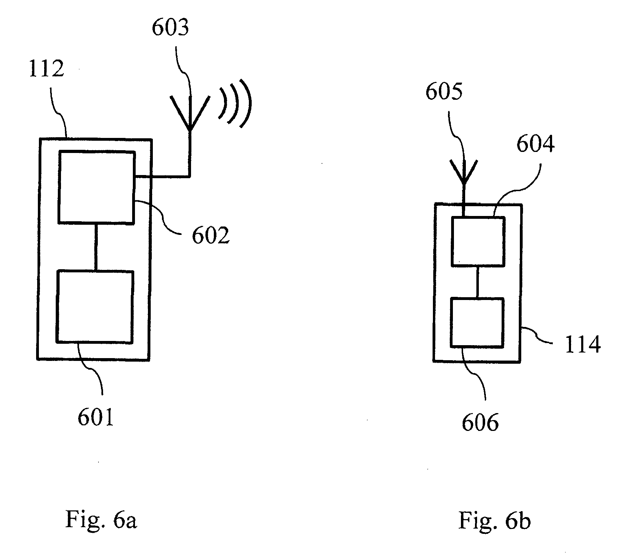

**Fig. 6a** illustrates a schematic diagram of an example of the base station 112 of the mobile communication system 100. The base station 112 is configured to perform the base station part 510 of the method 500.

The base station 112 comprises a processor 601 for generating 511 the master sub-frame 210 of the downlink radio frame 200 and a communication interface 602 with an antenna 603 for transmitting 512 the master sub-frame 210 to the mobile stations 114. The communication interface 602 may comprise a transmitter circuit for generating a radio frequency signal comprising the master sub-frame 210.

**Fig. 6b** illustrates a schematic diagram of an example of the mobile station 114 of the mobile communication system 100. The mobile station 114 is configured to perform the mobile station part 520 of the method 500. The mobile station 114 comprises a communication interface 604 with an antenna 605 for receiving the master frame 210. The communication interface 604 may comprise a receiver circuit for receiving the radio frequency signal comprising the master sub-frame 210. The mobile station 114 comprises a processor 606 for reading 521 the scheduling information 200 of the master sub-frame 210 and for processing 522, based on the scheduling information 300 of the master sub-frame 210, at least the portion of the sub-frames 210, 220, 230, 240 of the downlink radio frame 200 for which the mobile station 114 is scheduled or is a candidate for scheduling.

For example, the method 500 may exploit channel prediction in the control channel design for energy and complexity saving. Using the method 500 a design of a control channel in the downlink of next generation wireless networks may be improved. In this way, it may be communicated to the mobile stations 114 when they are going to be scheduled more precisely and efficiently. Further, added information afforded by a predicted channel may be exploited in the method 500.

For example, in the method 500 a design for a control channel for the downlink in wireless networks is used, which exploits the benefits of channel prediction. By exploiting the knowledge of the channel in future sub-frames, at the beginning of each downlink radio frame 200, the base station 112 may communicate which subset of mobile stations 114 may be scheduled during the next few sub-frames 210, 220, 230, 240. For example, the base station 112 may specify a set of potential sub-frames 220, 230, 240 for each of the mobile stations 114 in which they might be scheduled. For example, mobile stations 114 that might be potentially scheduled in each sub-frame 220, 230, 240 may report their channel state information (CSI) feedback from the previous sub-frame to the base station 112. For example, a scheduler at the base station 112 may perform an optimization over a subset of potential candidates and those mobile stations 114 may check a control channel at the beginning of the sub-frame 220, 230, 240 to see whether they are actually scheduled or not.

For example, the method 500 may allow energy saving by significantly decreasing the number of times that each mobile station 114 has to check the control signal and estimate the channel. For example, the method 500 may facilitate energy saving at the mobile station 114, which may be a design criterion in 5G and, in general, even in current and future wireless networks. For example, by exploiting the benefits of channel prediction, the method 500 may allow a design of the control channel which limits the operations performed by the users or mobile stations 114 to check if they have been scheduled by the base station 112 in particular sub-frames and to report the CSI feedback. For example, by reducing a computational burden, the method 500 may allow energy saving at a user side or a side of the mobile station 114, which may be attractive to the wireless communications industry as a whole. For example, in case of perfect prediction, this energy gain may come at no loss in spectral efficiency.

For example, after receiving or reading 521 the scheduling information 300, each mobile station 114 may know at the beginning of the downlink radio frame 200 in which sub-frames 220, 230, 240 it could be scheduled by the base station 112 and may, therefore, check the sub-control signal 221, 231, 241 only in specific sub-frames 220, 230, 240.

For example, in the last sub-frame 240 or in sub-frame K all mobile stations 114 may perform channel estimation and feed the CSI back, because all mobile stations 114 may be potential candidates in a first sub-frame 210 of a following downlink radio frame 200 for which the super scheduler optimization by the super scheduling device 410 has not yet been done.

For example, at the beginning of the downlink radio frame 200, the base station 112 may inform each mobile station 114 in which specific sub-frames it could be scheduled. This kind of information exchange may be standardized.

For example, the master control signal 211 may comprise information indicating which mobile stations 114 are served in the first sub-frame or the master sub-frame 210 and which transmission parameters are used. For example, the master control signal 211 may be or may form a super-control signal. For example, the downlink radio frame 200 may be or may form a super-frame.

For example, in sub-frames t=1,2,...K-1, e.g. in the sub-frames 210, 220, 230, a mobile station 114 performs channel estimation in sub-frame $t$-1 and sends the CSI feedback to the base station 112, if the mobile station 114 belongs to $N_{TS}[t]$, where t=2,3,...K. If the mobile station 114 does not belong to $N_{TS}[t]$, where t=2,3,...K, and therefore knows that it will not be scheduled in sub-frame $t$, the mobile station 114 may avoid performing channel estimation in sub-frame $t$-1 and may subsequently avoid transmitting the feedback to the base station 112.

At least parts of the above described radio communications network including the base station 112 could be implemented using network functions virtualization (NFV). NFV is a network architecture that makes use of technologies of computer virtualization. Entire network equipment like base stations or parts thereof or part of their functions can be virtualized using software building blocks that may connect, or interact, to create communication services. A virtualized network function of e.g. a base station may include at least one virtual machine running different software and processes, on top of standard high-volume servers, switches and storage, or a cloud computing infrastructure, instead of having customized hardware appliances for each network function. As such a base station function may be implemented using a computer program product embodied on a non-transitory computer readable medium (M) for performing operations, wherein the computer program product comprises instructions, that when executed by a processor (Pr), perform the operations of the specific base station function.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and examples of the invention, as well as specific examples thereof, are intended to encompass equivalents thereof.

Functional blocks shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other examples may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some examples a single step may include or may be broken into multiple sub steps. Such sub steps may be included and part of the disclosure of this single step unless explicitly excluded.

## Claims

1. A method (500) for a mobile communication system (100), the mobile communication system (100) comprising a base station (112) communicating with a plurality of associated mobile stations (114) using a downlink radio frame (200) comprising a plurality of sub-frames (210, 220, 230, 240), the method (500) comprising

   the base station (112) generating (511) a master sub-frame (210) of the downlink radio frame (200), the master sub-frame (210) including scheduling information (300) indicating which of the mobile stations (114) are candidates for scheduling in sub-frames (220, 230, 240) other than the master sub-frame (210) of the downlink radio frame (200), and which of the mobile stations (114) are scheduled by the base station (112) in the master sub-frame (210);

the base station (112) transmitting (512) the master sub-frame (210) to the plurality of associated mobile stations (114);

at least one mobile station (114) of the plurality of associated mobile stations (114) reading (521) the scheduling information (300) of the master sub-frame (210); and

the at least one mobile station (114) processing (522), based on the scheduling information (300) of the master sub-frame (210), at least a portion of the sub-frames (210, 220, 230, 240) of the downlink radio frame (200) for which the at least one mobile station (114) is scheduled or is a candidate for scheduling.

2. The method (500) of claim 1, further comprising

the base station (112) receiving channel state information from the at least one mobile station (114) of the plurality of associated mobile stations (114), the channel state information relating to at least one further downlink radio frame previously transmitted by the base station (112);

the base station (112) determining, based on the received channel state information, a set of resource allocation values, wherein each resource allocation value indicates a proportion of resources assigned to a mobile station (114) of the plurality of associated mobile stations (114) in a sub-frame (210, 220, 230, 240) of the downlink radio frame (200); and

the base station (112) determining, based on the determined set of resource allocation values, which of the mobile stations (114) are scheduled by the base station (112) in the master sub-frame (210) and which mobile stations (114) are candidates for scheduling in sub-frames (220, 230, 240) other than the master sub-frame (210) of the downlink radio frame (200).

3. The method (500) of claim 2, wherein the determining of the set of resource allocation values comprises

determining, based on the received channel state information, a set of achievable rate values, wherein each achievable rate value indicates a predicted achievable rate for a mobile station (114) of the plurality of associated mobile stations (114) in a sub-frame (210, 220, 230, 240) of the downlink radio frame (200); and

determining, based on the determined set of achievable rate values, the set of resource allocation values.

4. The method (500) of claim 2, wherein the determining of the set of resource allocation values comprises

determining, based on the received channel state information, an achievable rate probability density function indicating a predicted achievable rate for each sub-frame (210, 220, 230, 240) of the downlink radio frame (200) and each mobile station (114) of the plurality of associated mobile stations (114); and

determining, based on the determined achievable rate probability density function, the set of resource allocation values.

5. The method (500) of claim 2, wherein the determining which mobile stations (114) are candidates for scheduling in sub-frames (220, 230, 240) other than the master sub-frame (210) of the downlink radio frame (200) comprises

for each sub-frame (220, 230, 240) other than the master sub-frame (210) of the downlink radio frame (200) ordering the plurality of associated mobile stations (114) according to the corresponding resource allocation value to obtain a respective ordered set of mobile stations (114) and selecting $N_{TS}$ mobile stations (114) with the highest corresponding resource allocation values of the respective ordered set of mobile stations (114) as candidates for scheduling in the respective sub-frame (220, 230, 240).

6. The method (500) of claim 2, wherein the determining which of the mobile stations (114) are scheduled by the base station (112) in the master sub-frame (210) comprises

ordering the mobile stations (114) of the plurality of associated mobile stations (114) according to the corresponding resource allocation value to obtain an ordered set of mobile stations (114); and

scheduling $N_{TS}$ mobile stations (114) with the highest corresponding resource allocation values of the ordered set of mobile stations (114) in the master sub-frame (210).

7. The method (500) of claim 1, further comprising

the at least one mobile station (114) transmitting further channel state information to the base station (112), the further channel state information relating to a first sub-frame preceding a second sub-frame of the downlink radio frame (200), wherein the at least one mobile station (114) is a candidate for scheduling in the second sub-frame;

the base station (112) scheduling, based on the further channel state information and the scheduling information (300) of the master sub-frame (210), mobile stations (114) of the plurality of associated mobile stations (114) identified as candidates in the master sub-frame (210) in the second sub-frame; and

the base station (112) generating the second sub-frame, wherein the second sub-frame includes sub-scheduling information indicating which mobile stations (114) are scheduled by the base station (112) in the second sub-frame.

8. The method (500) of claim 1, wherein for each mobile station (114) of the plurality of associated mobile stations (114) a respective dedicated physical downlink channel is allocated by the base station (112).

9. The method (500) of claim 1, wherein the master sub-frame (210) is the first sub-frame of the downlink radio frame (200).

10. A mobile communication system (100), comprising

a plurality of mobile stations (114); and
a base station (112) for communicating with the plurality of mobile stations (114) using a downlink radio frame (200) comprising a plurality of sub-frames (210, 220, 230, 240), wherein the mobile stations (114) are associated with the base station (112);
wherein the base station (112) comprises
a processor (601) configured to generate a master sub-frame (210) of the downlink radio frame (200), the master sub-frame (210) including scheduling information (300) indicating which of the mobile stations (114) are candidates for scheduling in sub-frames (220, 230, 240) other than the master sub-frame (210) of the downlink radio frame (200), and which of the mobile stations (114) are scheduled by the base station (112) in the master sub-frame (210); and
a communication interface (602) configured to transmit the master sub-frame (210) to the plurality of mobile stations (114); and
wherein a mobile station (114) of the plurality of mobile stations (114) comprises
a communication interface (604) configured to receive the master sub-frame (210); and
a processor (606) configured to read the scheduling information (300) of the master sub-frame (210) and to process, based on the scheduling information (300) of the master sub-frame (210), at least a portion of the sub-frames (210, 220, 230, 240) of the downlink radio frame (200) for which the mobile station (114) is scheduled or is a candidate for scheduling.

11. A method (510) for a base station (112) of a mobile communication system (100), wherein the base station (112) is configured to communicate with a plurality of associated mobile stations (114) using a downlink radio frame (200) comprising a plurality of sub-frames (210, 220, 230, 240), the method (510) comprising

generating (511) a master sub-frame (210) of the downlink radio frame (200), the master sub-frame (210) including scheduling information (300) indicating which of the mobile stations (114) are candidates for scheduling in sub-frames (220, 230, 240) other than the master sub-frame (210) of the downlink radio frame (200), and which of the mobile stations (114) are scheduled by the base station (112) in the master sub-frame (210); and
transmitting (512) the master sub-frame (210) to the plurality of associated mobile stations (114).

12. A base station (112) of a mobile communication system (100), wherein the base station (112) is configured for communicating with a plurality of associated mobile stations (114) using a downlink radio frame (200) comprising a plurality of sub-frames (210, 220, 230, 240), the base station (112) comprising

a processor (601) configured to generate a master sub-frame (210) of the downlink radio frame (200), the master sub-frame (210) including scheduling information (300) indicating which of the mobile stations (114) are candidates for scheduling in sub-frames (220, 230, 240) other than the master sub-frame (210) of the downlink radio frame (200), and which of the mobile stations (114) are scheduled by the base station (112) in the master sub-frame (210); and
a communication interface (602) configured to transmit the master sub-frame (210) to the plurality of associated mobile stations (114).

13. A method (520) for a mobile station (114) of a mobile communication system (100), the mobile communication system (100) comprising a base station (112) communicating with a plurality of associated mobile stations (114) using a downlink radio frame (200) comprising a plurality of sub-frames (210, 220, 230, 240), the downlink radio frame (200) comprising a master sub-frame (210) including scheduling information (300) indicating which of the mobile stations (114) are candidates for scheduling in sub-frames (220, 230, 240) other than the master sub-frame (210) of the downlink radio frame (200), and which of the mobile stations (114) are scheduled by the base station (112) in the master sub-frame (210), the method (520) comprising

reading (521) the scheduling information (300)

of the master sub-frame (210); and
processing (522), based on the scheduling information (300) of the master sub-frame (210), at least a portion of the sub-frames (210, 220, 230, 240) of the downlink radio frame (200) for which the mobile station (114) is scheduled or is a candidate for scheduling.

14. A mobile station (114) of a mobile communication system (100), the mobile communication system (100) comprising a base station (112) communicating with a plurality of associated mobile stations (114) using a downlink radio frame (200) comprising a plurality of sub-frames (210, 220, 230, 240), the downlink radio frame (200) comprising a master sub-frame (210) including scheduling information (300) indicating which of the mobile stations (114) are candidates for scheduling in sub-frames (220, 230, 240) other than the master sub-frame (210) of the downlink radio frame (200), and which of the mobile stations (114) are scheduled by the base station (112) in the master sub-frame (210), the mobile station (114) comprising

a communication interface (604) configured to receive the master sub-frame (210); and
a processor (606) configured to read the scheduling information (300) of the master sub-frame (210) and to process, based on the scheduling information (300) of the master sub-frame (210), at least a portion of the sub-frames (210, 220, 230, 240) of the downlink radio frame (200) for which the mobile station (114) is scheduled or is a candidate for scheduling.

# FIG. 1

FIG. 2

300

| sub-frame index t | RNTIs of mobile stations |
|---|---|
| 1 | 0xA13F, 0xBD59, 0xDE62 |
| 2 | 0x3FF1, 0x73E1, 0xBD59 |
| 3 | 0x8FE2, 0xA13F |
| 4 | 0x73E1, 0xDE62, 0xEE21 |
| 5 | 0x48A3, 0xBD59, 0xCA3 |
| 6 | 0x3FF1, 0xA13F |
| 7 | 0xDE62, 0xF29A, 0xEE21 |
| 8 | 0x92A4, 0xBD59 |
| 9 | 0xDE62 |
| 10 | 0x73E1, 0xA13F |

Fig. 3

# FIG. 4

EP 3 282 797 A1

500

Generating a master sub-frame ⌒ 511

510

Transmitting the master sub-frame ⌒ 512

Reading the scheduling information ⌒ 521

520

Processing ⌒ 522

Fig. 5

603

112

602

601

Fig. 6a

605

604

114

606

Fig. 6b

Europäisches
Patentamt

European
Patent Office

Office européen
des brevets

# EUROPEAN SEARCH REPORT

Application Number

EP 16 30 6038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/113942 A1 (KIM JAE HEUNG [KR]) 10 May 2012 (2012-05-10) | 1-3,7-14 | INV. H04W72/12 |
| A | * figures 1-4, 7, 8 * | 4-6 | |
| | * paragraph [0010] - paragraph [0020] * | | |
| | * paragraph [0023] * | | |
| | * paragraph [0041] - paragraph [0042] * | | |
| | * paragraph [0044] - paragraph [0071] * | | |
| | * paragraph [0073] - paragraph [0088] * | | |
| | * paragraph [0092] * | | |
| | * paragraph [0094] - paragraph [0095] * | | |
| | * paragraph [0098] - paragraph [0128] * | | |
| | * paragraph [0131] - paragraph [0133] * | | |
| | * paragraph [0137] - paragraph [0148] * | | |
| | * paragraph [0154] - paragraph [0163] * | | |
| | * claims 1-5, 7-11, 14 * | | |
| | ----- | | |
| Y | US 2012/052894 A1 (MANSSOUR JAWAD [SE] ET AL) 1 March 2012 (2012-03-01) | 1-3,7-14 | |
| A | * figures 5-7 * | 4-6 | |
| | * paragraph [0011] - paragraph [0013] * | | |
| | * paragraph [0036] - paragraph [0039] * | | TECHNICAL FIELDS SEARCHED (IPC) |
| | * paragraph [0042] - paragraph [0063] * | | |
| | * claims 1-23 * | | H04W |
| | ----- | | |
| A | US 2015/043480 A1 (LEE DAEWON [US] ET AL) 12 February 2015 (2015-02-12) | 1-14 | |
| | * figures 4-13, 18, 20 * | | |
| | * paragraph [0029] - paragraph [0034] * | | |
| | * paragraph [0037] - paragraph [0052] * | | |
| | * paragraph [0056] - paragraph [0066] * | | |
| | * claims 1-20 * | | |
| | ----- | | |
| | -/-- | | |

The present search report has been drawn up for all claims

| Place of search | Date of completion of the search | Examiner |
|---|---|---|
| The Hague | 13 February 2017 | Tseliou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 30 6038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 293 635 A1 (SHARP KK [JP]) 9 March 2011 (2011-03-09) * figures 1-3, 9, 13-21 * * paragraph [0023] - paragraph [0029] * * paragraph [0034] - paragraph [0035] * * paragraph [0042] - paragraph [0044] * * paragraph [0046] - paragraph [0054] * * paragraph [0056] * * paragraph [0058] - paragraph [0073] * * paragraph [0076] - paragraph [0081] * * paragraph [0083] - paragraph [0093] * * paragraph [0096] - paragraph [0101] * * paragraph [0103] - paragraph [0114] * * paragraph [0119] * * claims 1, 3-10 * ----- | 1-14 | |

TECHNICAL FIELDS
SEARCHED      (IPC)

The present search report has been drawn up for all claims

| Place of search | Date of completion of the search | Examiner |
|---|---|---|
| The Hague | 13 February 2017 | Tseliou, Georgia |

## ANNEX TO THE EUROPEAN SEARCH REPORT
## ON EUROPEAN PATENT APPLICATION NO.

EP 16 30 6038

This annex lists the patent family members relating to the patent documents cited in  the above-mentioned European search report.
The members are as contained in the European Patent Office EDP file on
The European Patent Office is in no way liable for these particulars which are merely given for the purpose of information.

13-02-2017

| Patent document cited in search report | | Publication date | Patent family member(s) | | Publication date |
|---|---|---|---|---|---|
| US 2012113942 | A1 | 10-05-2012 | KR 20110004785 A<br>US 2012113942 A1<br>WO 2011004989 A2 | | 14-01-2011<br>10-05-2012<br>13-01-2011 |
| US 2012052894 | A1 | 01-03-2012 | EP 2609784 A1<br>US 2012052894 A1<br>WO 2012026858 A1 | | 03-07-2013<br>01-03-2012<br>01-03-2012 |
| US 2015043480 | A1 | 12-02-2015 | NONE | | |
| EP 2293635 | A1 | 09-03-2011 | CN 102067695 A<br>EP 2293635 A1<br>EP 2501194 A2<br>JP 5093912 B2<br>JP 5369230 B2<br>JP 2013009420 A<br>US 2011103290 A1<br>WO 2009157443 A1 | | 18-05-2011<br>09-03-2011<br>19-09-2012<br>12-12-2012<br>18-12-2013<br>10-01-2013<br>05-05-2011<br>30-12-2009 |

EPO FORM P0459

For more details about this annex : see Official Journal of the European Patent Office, No. 12/82